# EUROPÄISCHE PATENTSCHRIFT

(11) **EP 2 715 303 B1**
(45) Veröffentlichungstag und Bekanntmachung des Hinweises auf die Patenterteilung: **20.05.2015**
(21) Anmeldenummer: 12715823.6
(22) Anmeldetag: 28.03.2012
(51) Int. Cl.: G01M 1/22, G01H 1/00

(54) **LABORGERÄT MIT EINEM SENSOR ZUM ERKENNEN VON VIBRATIONEN**
LABORATORY APPARATUS COMPRISING A SENSOR FOR DETECTING VIBRATIONS
APPAREIL DE LABORATOIRE DOTÉ D'UN CAPTEUR POUR DÉTECTER DES VIBRATIONS

(30) Priorität: 27.05.2011 DE 102011102607
(43) Veröffentlichungstag der Anmeldung: 09.04.2014
(73) Patentinhaber: IKA - Werke GmbH & Co. KG, 79219 Staufen (DE)
(72) Erfinder: EBLE, Erhard, 79189 Bad Krozingen (DE)
(74) Vertreter: Börjes-Pestalozza, Henrich
(86) Internationale Anmeldenummer: PCT/EP2012/001366
(87) Internationale Veröffentlichungsnummer: WO 2012/163443

(56) Entgegenhaltungen:
- WO-A1-2006/005769
- DE-A1-102007 010 800
- US-A- 4 771 637
- US-A- 4 905 518
- US-B1- 6 205 872

## Beschreibung

Die Erfindung betrifft ein Laborgerät mit einem Antrieb und mit wenigstens einer zumindest einen Sensor aufweisenden Vorrichtung zum Erkennen von Vibrationen oder Schwingungen oder von Unwucht.

Solche Vorrichtungen zum Erkennen von Vibrationen oder von Unwucht oder von Schwingungen mit einem entsprechenden Sensor sind beispielsweise bei der Erdbebenmessung bekannt.

Ein Vibrationssensor zur Erfassung von Schwingungen an einer Fahrzeugkarosserie ist in WO 2006/005769 offenbart.

In der Technik und insbesondere bei Laborgeräten tritt häufig das Problem auf, Vibrationen, Schwingungen oder Unwuchten erkennen zu müssen oder aber eine Beschädigung oder Zerstörung des entsprechenden Laborgeräts oder des Versuchsaufbaus in Kauf zu nehmen. Auch eine Gefährdung des Benutzers des entsprechenden Laborgeräts ist in Extremfällen nicht ausgeschlossen.

Zwar sind Laborgeräte bekannt, bei denen Vibrationen oder Unwuchten durch eingebaute derartige Sensoren festgestellt werden können, jedoch gilt dies für eine Vielzahl von Laborgeräten nicht und darüber hinaus muss ein derartiges Laborgerät auch eine entsprechende Konstruktion aufweisen.

Es besteht deshalb die Aufgabe, eine Vorrichtung mit zumindest einem Sensor zum Erkennen von Vibrationen oder Schwingungen oder Unwuchten zu schaffen, die an praktisch beliebigen Laborgeräten vorgesehen oder angebracht werden kann.

Zur Lösung dieser Aufgabe ist das eingangs definierte Laborgerät mit der Vorrichtung dadurch gekennzeichnet, dass diese Vorrichtung eine Kupplung aufweist, die zu einer an dem Laborgerät angeordneten Gegenkupplung passt, dass die Kupplung in Gebrauchsstellung mit der Gegenkupplung verbunden ist und dass die Vorrichtung in dieser Gebrauchsstellung mit dem Laborgerät und/oder seiner Steuerung oder Regelung drahtlos oder über elektrische Kontakte verbunden ist.

Auf diese Weise kann an praktisch jedem Laborgerät, welches in der Regel eine elektrische Schnittstelle aufweist, die Vorrichtung mit Sensor zur Unwuchterkennung - gegebenenfalls auch nachträglich - angebracht werden, um die Motorsteuerung des Antriebes des Laborgeräts je nach auftretenden und ermittelten Vibrationen, Schwingungen oder Unwuchten zu beeinflussen, indem die Drehzahl des Antriebsmotors vermindert oder erhöht oder der Motor abgeschaltet wird. Erfindungsgemäß wird also die Vorrichtung mit der Ansteuerung des Antriebsmotors verbunden.

Eine besonders zweckmäßige Ausführungsform kann darin bestehen, dass die Gegenkupplung des Laborgeräts dessen elektrische Schnittstelle ist und dass der Sensor vorzugsweise mit einer akustischen und/oder optischen Anzeige- oder Signaleinrichtung verbunden ist. Wenn die Kupplung der Vorrichtung an die elektrische Schnittstelle des Laborgeräts als Gegenkupplung angepasst ist, kann also an praktisch jedem Laborgerät mit einer derartigen Schnittstelle die erfindungsgemäße Vorrichtung auch nachträglich angebracht werden, um insbesondere die Steuerung des Antriebs je nach festgestellten Vibrationen oder Schwingungen oder Unwuchten zu beeinflussen. Besonders günstig ist es dabei, wenn als Gegenkupplung an dem Laborgerät eine Standardschnittstelle dient, die nämlich an praktisch jedem Laborgerät vorhanden ist. Der Benutzer braucht nur die den Sensor aufweisende Vorrichtung an diese Standardschnittstelle anzukuppeln beziehungsweise aufzustecken, um die gewünschte Überwachung und Beeinflussung der Steuerung zu erhalten, wobei je nach Ausstattung dann auch eine akustische oder optische Anzeige oder Signaleinrichtung auf möglicherweise gefährliche Schwingungen, Vibrationen oder Unwuchten aufmerksam machen kann.

Der Sensor kann also über die als Schnittstelle ausgebildete Gegenkupplung mit der Steuerung des Antriebsmotors verbunden sein und bei Überschreiten eines Grenzwerts die Motordrehzahl ändern, nämlich vermindern oder erhöhen oder den Antriebsmotor abschalten. Somit kann durch eine derartige Ausgestaltung eine automatische Verhinderung oder auch Beseitigung von Schäden durch Unwucht oder durch Vibrationen oder Schwingungen erreicht werden selbst bei Laborgeräten, die ursprünglich nicht mit einer solchen Überwachung oder einem derartigen Sensor versehen sind.

Wenn die Gegenkupplung an dem Laborgerät eine Standardschnittstelle ist und die Kupplung der Vorrichtung dazu passt, ist eine nachträgliche Anbringung einer solchen Vorrichtung an praktisch beliebigen Laborgeräten, bei denen es zu Unwuchten oder Schwingungen kommen kann, auf einfache Weise möglich. Der Benutzer braucht die Vorrichtung nur auf diese Standardschnittstelle aufzustecken, um die gewünschte Überwachung zu erhalten.

Eine abgewandelte Ausführungsform kann vorsehen, dass eine mechanische Gegenkupplung des Laborgeräts zu einer mechanischen Kupplung der Vorrichtung passt und der Sensor mit der Motorsteuerung - in Gebrauchsstellung - drahtlos verbunden ist und einen Sender und vorzugsweise eine eigene Stromquelle aufweist, wobei das Laborgerät einen zu dem Sensor und dessen Sender passenden Empfänger aufweist. Diese Anordnung kann zweckmäßig sein, wenn eine passende Schnittstelle an dem Laborgerät nicht vorhanden oder nicht anwendbar ist.

Dabei ist es günstig, wenn der Empfänger in dem Laborgerät zum Zusammenwirken mit einer Fernbedienung ausgebildet ist und der Sender der Vorrichtung ah diesen Empfänger angepasst ist. Es ist bereits bei einer großen Anzahl von Laborgeräten üblich, deren Betätigung ausschließlich oder auch mittels Fernbedienung durchzuführen, so dass ein entsprechender Empfänger vorhanden ist. Dies kann dann ausgenutzt werden, wenn die Vorrichtung mit dem Sensor einen entsprechenden Sender hat.

Der Sensor kann ein Beschleunigungssensor sein. Ein Beschleunigungssensor kann auf einfache Weise Schüttel- oder Rüttelbewegungen des ihn aufweisenden Laborgeräts erkennen und spricht also auf Vibrationen, Schwingungen und Unwuchten an.

Dabei kann der Sensor piezobasiert oder induktiv mit Tauchspule oder mittels auslenkbarer Masse oder mittels wenigstens einem Dehnmessstreifen ausgebildet sein. Derartig gestaltete Sensoren haben sich bei der Erkennung von Vibrationen, Schwingungen oder Unwuchten bewährt, so dass eine entsprechende Verwendung im Zusammenhang mit dem erfindungsgemäßen Laborgerät eine preiswerte Lösung darstellt.

Die mit dem Laborgerät zu kuppelnde Vorrichtung kann eine Signaleinrichtung oder Leuchte aufweisen, die die Betriebsbereitschaft beim Kuppeln der Vorrichtung mit dem Laborgerät anzeigt. Dadurch erhält der Benutzer eine entsprechende Kontrolle, wenn er die Vorrichtung mit dem Laborgerät kuppelt.

Eine weitere abgewandelte Ausführungsform kann vorsehen, dass die Vorrichtung mit dem Sensor einen Anschluss an die Stromversorgung des Laborgeräts aufweist und der Strom für den Antriebsmotor des Laborgeräts in Gebrauchsstellung über die Vorrichtung geleitet ist und dass die Vorrichtung insbesondere eine Einrichtung zum Unterbrechen der Stromzufuhr beim Überschreiten eines Grenzwerts von Vibrationen oder Schwingungen oder Unwuchten aufweist. Bei einer derartigen Ausführungsform und Anordnung können auch ältere Laborgeräte mit einfacher Ansteuerung ihres Antriebs nachträglich mit der Vorrichtung mit Sensor versehen und im Falle von zu starken Vibrationen, Schwingungen oder Unwuchten ausgeschaltet werden.

Vor allem bei Kombination einzelner oder mehrerer der vorbeschriebenen Merkmale und Maßnahmen ergibt sich auf einfache Weise die Möglichkeit, ein bereits existierendes Laborgerät nachträglich oder ein neues Laborgerät von vorneherein mit der Vorrichtung mit Sensor zu versehen, um dann auf Vibrationen, Schwingungen oder Unwuchten in oder einen oder anderen beschriebenen Weise reagieren zu können. Auch neue Laborgeräte können also in dieser Weise ausgestaltet sein und benötigen dann bei ihrer Fertigung praktisch keine zusätzlichen Maßnahmen, weil die Vorrichtung mit Sensor in der beschriebenen Weise angekuppelt werden kann.

Nachstehend ist ein Ausführungsbeispiel der Erfindung anhand der Zeichnung näher beschrieben. Es zeigt in zum Teil schematisierter Darstellung:
- Fig. 1: eine Vorderansicht,
- Fig. 2: eine teilweise im Längsschnitt gehaltene Seitenansicht,
- Fig. 3: eine Rückansicht,
- Fig. 4: eine Draufsicht des erfindungsgemäßen Laborgeräts, wobei in Fig. 4 die Vorrichtung mit Sensor vor dem Ankuppeln an die Schnittstelle des Laborgeräts dargestellt ist, sowie
- Fig. 5: eine der Fig. 4 entsprechende Draufsicht des Laborgeräts mit angekuppelter Vorrichtung mit Sensor.

Ein im Ganzen mit 1 bezeichnetes Laborgerät ist im Ausführungsbeispiel ein Rührgerät, welches dazu vorgesehen ist, mit einem in eine Masse oder Flüssigkeit einbringbaren Rührwerkzeug diese Masse oder Flüssigkeit zu rühren. Dieses Rührwerkzeug ist dabei mit einem Spannfutter 2 kuppelbar, welches seinerseits über eine Welle 3 mit einem elektrischen Antriebsmotor 4 direkt oder über ein Getriebe verbunden ist, so dass nach dem Einsetzen eines Rührwerkzeuges in das Spannfutter 2 durch Einschalten dieses Antriebsmotors 4 gerührt werden kann. Die Steuerung oder Regelung des Antriebsmotors 4 ist auf einer Leiterplatte 41 vorgesehen.

Der Antriebsmotor 4 ist in einem ihn umschließenden Gehäuse 5 untergebracht, an welchem außenseitig eine Befestigungsstelle 6 zum Festlegen dieses Laborgerätes 1 in Gebrauchsstellung vorgesehen ist. Man erkennt im Ausführungsbeispiel an der Rückwand 7 des Gehäuses 5 als Befestigungsstelle 6 eine mit einer Befestigungsschraube 8 versehene Konsole 9, die ein Aufstecken des Laborgeräts mit dieser Befestigungsstelle 6 auf einen horizontalen Ausleger 61 eines Stativs ermöglicht. Die Stromzufuhr für den Antriebsmotor 4 erfolgt über ein Kabel 42.

Anstelle eines Rührgeräts könnte das Laborgerät 1 aber auch ein Mischgerät oder ein Schüttelgerät oder ein sonstiges Laborgerät sein.

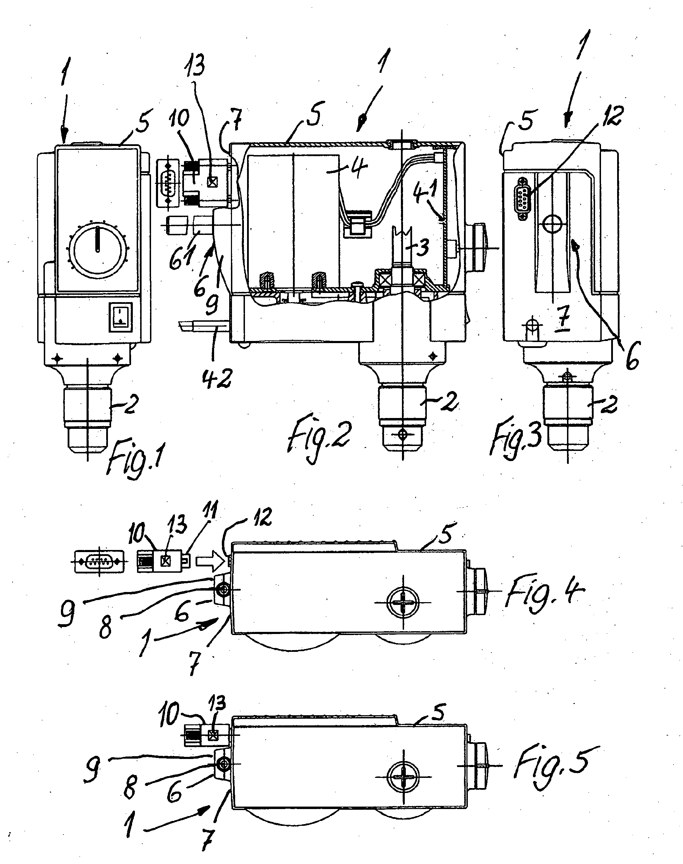

In all diesen Fällen und ebenso auch im Ausführungsbeispiel ist deshalb eine einen Sensor 13 aufweisende Vorrichtung 10 zum Erkennen von Vibrationen oder Schwingungen oder Unwuchten vorgesehen, die gemäß Fig. 4 eine Kupplung 11 aufweist, welche zu einer an dem Laborgerät 1 angeordneten Gegenkupplung 12 passt.

Während gemäß Fig. 4 die Vorrichtung 10 mit ihrer Kupplung 11 noch nicht mit dem Laborgerät 1 gekuppelt und verbunden ist, ist dies in den Figuren 2 und 4 bereits der Fall. In Gebrauchsstellung ist also die Kupplung 11 mit der Gegenkupplung 12 des Laborgeräts 1 verbunden und darüber hinaus ist die Vorrichtung 10 in dieser Gebrauchsstellung mit dem Laborgerät 1 und seiner Steuerung und/oder seinem Antrieb 4 drahtlos oder über elektrische Kontakte verbunden.

In den Figuren ist erkennbar, dass die Gegenkupplung 12 im Ausführungsbeispiel die elektrische Schnittstelle des Laborgeräts 1 ist, so dass die Vorrichtung 10 gemäß den Figuren 4 und 5 auf einfache Weise auch nachträglich an ein derartiges Laborgerät 1 angeschlossen und angekuppelt werden kann, um dieses bezüglich Vibrationen, Schwingungen oder Unwuchten überwachen zu können. Auch eine akustische und/oder optische Anzeige- oder Signaleinrichtung könnte über den Sensor 13 angesteuert werden.

Der über die als Schnittstelle ausgebildete Gegenkupplung 12 mit der Steuerung des Antriebsmotors 4 verbundene Sensor 13 kann bei Überschreiten eines Grenzwertes die Motordrehzahl ändern, nämlich vermindern oder erhöhen oder den Antriebsmotor 4 abschalten. Auf jeden Fall kann dadurch mit dieser einfach mit dem Laborgerät 1 verbundenen Vorrichtung 10 verhindert werden, dass Schäden durch zu starke Vibrationen oder Schwingungen oder Unwuchten auftreten.

Die Gegenkupplung 12 an dem Laborgerät 1 ist dabei im Ausführungsbeispiel gemäß Fig. 3 eine Standardschnittstelle, zu welcher die Kupplung 11 der Vorrichtung 10 aufgrund einer entsprechenden Ausbildung passt. Der Sensor 13 kann ein Beschleunigungssensor sein, so dass er besonders gut auf Unwuchten oder auch auf Vibrationen und Schwingungen anspricht. Dabei kann er piezobasiert oder induktiv mit Tauchspule oder mittels auslenkbarer Masse oder mittels wenigstens einem Dehmessstreifen ausgebildet sein.

Das Laborgerät 1 mit einem elektrischen Antrieb 4 ist mit einer zumindest einen Sensor 13 aufweisenden Vorrichtung 10 zum Erkennen von Vibrationen, Schwingungen oder Unwuchten ausgestattet, wobei die Vorrichtung 10 über eine an ihr befindliche Kupplung 11 mit einer an dem Laborgerät 1 befindlichen Gegenkupplung zusammenpasst und in gekuppelter Position mit dem Laborgerät 1 oder seiner Steuerung oder seinem Antrieb drahtlos oder über elektrische Kontakte verbunden ist. Treten Vibrationen, Schwingungen oder Unwuchten auf, werden diese von dem Sensor 13 erkannt, der durch die Verbindung der Kupplung 11 mit der Gegenkupplung 12 mit der Steuerung oder der Regelung des Antriebsmotors 4 verbunden oder verschaltet ist und bei unerwünschten oder gefährlichen Schwingungen, Vibrationen oder Unwuchten den Antriebsmotor 4 ausschalten oder seine Drehzahl verändern kann.

## Patentansprüche

1. Laborgerät (1) mit einem Antrieb (4) und mit wenigstens einer zumindest einen Sensor (13) aufweisenden Vorrichtung (10) zum Erkennen von Vibrationen oder Schwingungen oder von Unwucht., **dadurch gekennzeichnet, dass** die Vorrichtung (10) eine Kupplung (11) aufweist, die zu einer an dem Laborgerat (1) angeordneten Gegenkupplung (12) passt, dass die Kupplung (11) in Gebrauchsstellung mit der Gegenkupplung (12) mechanisch verbunden ist und dass die Vorrichtung (10) in dieser Gebrauchsstellung mit einer Steuerung des Antriebs (4) drahtlos oder über elektrische Kontakte verbunden ist.

2. Laborgerät nach Anspruch 1, **dadurch gekennzeichnet, dass** die Gegenkopplung (12) durch eine elektrische Schnittstelle des Laborgeräts (1) gebildet ist und dass der Sensor (13) vorzugsweise mit einer akustischen und/oder optischen Anzeige- oder Signaleinrichtung verbunden ist.

3. Laborgerät nach Anspruch 1 oder 2, **dadurch gekennzeichnet, dass** der Sensor (13) über die als Schnittstelle ausgebildete Gegenkupplung (12) mit der Steuerung des Antriebsmotors (4) verbunden ist und bei Überschreiten eines Grenzwerts die Motordrehzähl ändert, nämlich vermindert oder erhöht oder den Antriebsmotor (4) abschalter.

4. Laborgerät nach einem der Ansprüche 1 bis 3, **dadurch gekennzeichnet, dass** die Gegenkupplung (12) an dem Laborgerät (1) eine Ständardschnittstelle ist und die Kupplung (11) der Vorrichtung (10) dazu passt.

5. Laborgerät nach einem der Ansprüche 1 bis 4, **dadurch gekennzeichnet, dass** eine mechanische Gegenkupplung des Laborgeräts (1) zu einer mechanischen Kupplung der Vorrichtung (10) passt und der Sensor (13) mit der Steuerung des Antriebs (4) drahtlos verbunden ist und einen Sender und vorzugsweise eine eigene Stromquelle aufweist, und dass das Laborgerät (1) einen zu dem Sensor (13) und dessen Sender passenden Empfänger aufweist.

6. Laborgerät nach einem der Ansprüche 1 bis 5, **dadurch gekennzeichnet, dass** der Empfänger zum Zusammenwirken mit einer Fernbedienung ausgebildet ist und der Sender der Vorrichtung (10) an diesen Empfänger angepasst ist.

7. Laborgerät nach einem der Ansprüche 1 bis 6, dadurch gekenntzeichnet, dass der Sensor (13) ein Beschleunigungssensor ist.

8. Laborgerät nach einem der Ansprüche 1 bis 7, **dadurch gekennzeichnet, dass** der Sensor (13) piezobasiert oder induktiv mit Tauchspule oder mittels auslenkbarer Masse oder mittels wenigstens einem Dehnmessstreifen ausgebildet ist.

9. Laborgerät nach einem der Ansprüche 1 bis 8, **dadurch gekennzeichnet, dass** die Vorrichtung (10) eine Signaleinrichtung oder Leuchte aufweist, die die Betriebsbereitschaft beim Kuppeln der Vorrichtung mit dem Laborgerät anzeigt.

10. Laborgerät nach einem der Ansprüche 1 bis 9, **dadurch gekennzeichnet, dass** die Vorrichtung (10) mit dem Sensor (13) einen Anschluss an die Stromversorgung des Laborgeräts (1) aufweist und der Strom für den Antriebsmotor (4) des Laborgeräts (1) in Gebrauchsstellung über die Vorrichtung (10) geleitet ist und dass die Vorrichtung (10) insbesondere eine Einrichtung zum Unterbrechen der Stromzufuhr bei Überschreiten eines Grenzwerts von Vibrationen oder Schwingungen aufweist.

## Claims

1. Laboratory apparatus (1) comprising a drive (4) and comprising at least one device (10) having at least one sensor (13) for detecting vibrations or oscillations or imbalance, **characterised in that** the device (10) has a coupling (11) which fits with a mating coupling (12) arranged on the laboratory apparatus (1), that the coupling (11) is mechanically connected in the operating position to the mating coupling (12), and that the device (10) is connected in this operating position to a controller of the drive (4) wirelessly or via electrical contacts.

2. Laboratory apparatus as claimed in claim 1, **characterised in that** the mating coupling (12) is formed by an electrical interface of the laboratory apparatus (1) and that the sensor (13) is preferably connected to an acoustic and/or optical display or signalling unit.

3. Laboratory apparatus as claimed in claim 1 or 2, **characterised in that** the sensor (13) is connected via the mating coupling (12) designed as an interface to the controller of the drive motor (4) and, when a limit value is exceeded, changes, i.e. reduces or increases, the motor speed or switches off the drive motor (4).

4. Laboratory apparatus as claimed in any one of claims 1 to 3, **characterised in that** the mating coupling (12) on the laboratory apparatus (1) is a standard interface and the coupling (11) of the device (10) fits therewith.

5. Laboratory apparatus as claimed in any one of claims 1 to 4, **characterised in that** a mechanical mating coupling of the laboratory apparatus (1) fits with a mechanical coupling of the device (10) and the sensor (13) is wirelessly connected to the controller of the drive (4) and has a transmitter and preferably a dedicated current source, and that the laboratory apparatus (1) has a receiver which fits with the sensor (13) and the transmitter thereof.

6. Laboratory apparatus as claimed in any one of claims 1 to 5, **characterised in that** the receiver is designed to cooperate with a remote controller and the transmitter of the device (10) is adapted to this receiver.

7. Laboratory apparatus as claimed in any one of claims 1 to 6, **characterised in that** the sensor (13) is an acceleration sensor.

8. Laboratory apparatus as claimed in any one of claims 1 to 7, **characterised in that** the sensor (13) is designed to be piezo-based or inductive with a plunger coil or is designed by means of deflectable mass or by means of at least one strain gauge.

9. Laboratory apparatus as claimed in any one of claims 1 to 8, **characterised in that** the device (10) has a signalling unit or lamp which displays readiness for operation when the device is coupled with the laboratory apparatus.

10. Laboratory apparatus as claimed in any one of claims 1 to 9, **characterised in that** the device (10) with the sensor (13) has a connection to the power supply of the laboratory apparatus (1) and the current for the drive motor (4) of the laboratory apparatus (1) is fed in the operating position via the device (10), and that the device (10) has in particular a unit for interrupting the power supply when a limit value for vibrations or oscillations is exceeded.

## Revendications

1. Appareil de laboratoire (1) avec un entraînement (4) et avec au moins un dispositif (10) présentant au moins un capteur (13) pour détecter des vibrations ou des oscillations ou un déséquilibre, **caractérisé en ce que** le dispositif (10) présente un couplage (11), qui s'adapte à un couplage opposé (12) disposé sur l'appareil de laboratoire (1), **en ce que** le couplage (11) est mécaniquement assemblé en position d'utilisation au couplage opposé (12) et **en ce que** le dispositif (10) est dans cette position d'utilisation relié sans fil ou par des contacts électriques à une commande de l'entraînement (4).

2. Appareil de laboratoire selon la revendication 1, **caractérisé en ce que** le couplage opposé (12) est formé par une interface électrique de l'appareil de laboratoire (1), et **en ce que** le capteur (13) est relié de préférence à un dispositif d'affichage ou de signalisation acoustique et/ou optique.

3. Appareil de laboratoire selon la revendication 1 ou 2, **caractérisé en ce que** le capteur (13) est relié à la commande du moteur d'entraînement (4) par le couplage opposé (12) réalisé en forme d'interface et il modifie la vitesse de rotation du moteur, à savoir il la diminue ou il l'augmente ou il arrête le moteur d'entraînement (4) en cas de dépassement d'une valeur limite.

4. Appareil de laboratoire selon l'une quelconque des revendications 1 à 3, **caractérisé en ce que** le couplage opposé (12) sur l'appareil de laboratoire (1) est une interface standard et le couplage (11) du dispositif (10) y est adapté.

5. Appareil de laboratoire selon l'une quelconque des revendications 1 à 4, **caractérisé en ce qu'**un couplage opposé mécanique de l'appareil de laboratoire (1) s'adapte à un couplage mécanique du dispositif (10) et le capteur (13) est relié sans fil à la commande de l'entraînement (4) et présente un émetteur et de préférence une source de courant propre, et **en ce que** l'appareil de laboratoire (1) présente un récepteur s'adaptant au capteur (13) et à son émetteur.

6. Appareil de laboratoire selon l'une quelconque des revendications 1 à 5, **caractérisé en ce que** le récepteur est configuré de façon à coopérer avec une commande à distance et l'émetteur du dispositif (10) est adapté à ce récepteur.

7. Appareil de laboratoire selon l'une quelconque des revendications 1 à 6, **caractérisé en ce que** le capteur (13) est un détecteur d'accélération.

8. Appareil de laboratoire selon l'une quelconque des revendications 1 à 7, **caractérisé en ce que** le capteur (13) est réalisé sur une base piézoélectrique ou inductive avec une bobine plongeante ou au moyen d'une masse déplaçable ou au moyen d'au moins un extensomètre.

9. Appareil de laboratoire selon l'une quelconque des revendications 1 à 8, **caractérisé en ce que** le dispositif (10) présente un dispositif de signalisation ou une lampe, qui indique la position prête à fonctionner lors du couplage du dispositif à l'appareil de laboratoire.

10. Appareil de laboratoire selon l'une quelconque des revendications 1 à 9, **caractérisé en ce que** le dispositif (10) présente avec le capteur (13) un raccordement à l'alimentation électrique de l'appareil de laboratoire (1) et le courant destiné au moteur d'entraînement (4) de l'appareil de laboratoire (1) en position d'utilisation est conduit via le dispositif (10) et **en ce que** le dispositif (10) présente en particulier un dispositif pour interrompre l'arrivée de courant lors d'un dépassement d'une valeur limite de vibrations ou d'oscillations.
